(19)

Europäisches
Patentamt
European
Patent Office
Office européen
des brevets

(11)  **EP 3 425 910 A1**

(12)  **EUROPEAN PATENT APPLICATION**

(43) Date of publication:
**09.01.2019 Bulletin 2019/02**

(51) Int Cl.:
**H04N 19/126** (2014.01)    **H04N 19/186** (2014.01)
**H04N 19/157** (2014.01)

(21) Application number: **17305880.1**

(22) Date of filing: **06.07.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Thomson Licensing
92130 Issy-les-Moulineaux (FR)**

(72) Inventors:
• **FRANCOIS, Edouard
  35576 Cesson-Sévigné (FR)**
• **CHEVANCE, Christophe
  35576 Cesson-Sévigné (FR)**
• **HIRON, Franck
  35576 Cesson-Sévigné (FR)**

(74) Representative: **Huchet, Anne et al
InterDigital CE Patent Holdings
20, rue Rouget de Lisle
92130 Issy-les-Moulineaux (FR)**

(54)    **A METHOD AND A DEVICE FOR PICTURE ENCODING**

(57)    A method for encoding a block of a picture represented in a first representation format is disclosed. The method comprises for at least one sample of the block and for one current component encoding the current component of the sample into a bitstream according to codec parameters set for said first representation format; wherein codec parameters for the first representation format are determined from the codec parameters for a second representation format and a first-to-second representation format mapping information; and wherein said first-to-second representation format mapping information is determined from statistics on color samples comprising a correspondence for a color sample between component value in the first representation format and component value in the second representation format.

Corresponding encoding device is disclosed.

FIGURE 5A

**Description**

1. TECHNICAL FIELD

The present principles generally relate to a method and a device for picture encoding, and more particularly, to a method and a device for encoding a block of a picture of high dynamic range and wide color gamut.

2. BACKGROUND ART

New generation video formats include wider color gamut, higher frame rate, and higher dynamic range. New standards have been created to support this type of content from capture, through encoding, distribution and up to end user rendering. A transfer function (TF) is used to convert an optical representation of a signal (linear light value) at capture into an integer format compatible with image processing such as encoding, or to perform the inverse operation of conversion from an integer representation to an optical representation. An electro-optical TF (EOTF) converts non-linear values into linear-light values, and the opto-electronic TF (OETF) converts linear-light values into non-linear values for display. For example, ITU-R Recommendation BT.2100 defines two sets of transfer functions namely Perceptual Quantizer (PQ) and Hybrid-Log Gamma (HLG). HLG is a relative transfer function (the OETF applies to normalized linear-light values, and the normalization depends on the actual peak luminance considered for the mastering display or camera). PQ is an absolute transfer function (the EOTF and its inverse do not depend on the peak luminance considered for the mastering display or camera). Rec. ITU-R BT.2100 also specifies color primaries for HDR, which actually correspond to the BT.2020 color primaries. To summarize, BT.2100 specifies the format of HDR video signals, that are represented in BT.2020 color primaries, with two possible transfer functions, PQ and HLG.

Besides, it is known that many current HDR content are represented in a PQ Y'CbCr 4:2:0 10-bits format. Therefore, many efforts are being made to optimally encode such signal, for instance using HEVC encoders. Technical Report ISO/IEC 23008-14 (2017), "Conversion and Coding Practices for HDR/WCG Y'CbCr 4:2:0 Video with PQ Transfer Characteristics" discloses solutions for optimal encoding based dedicated codec parameters responsive to luma-dependent local QP adaptation, to signal remapping prior to encoding, and to residual signal remapping inside the encoding process.

However, no specific solution to encode current HDR content represented with an HLG transfer function has been developed. The current approach for HLG signal is to re-use typical codec parameters used for SDR video signal. Indeed, as HLG is described as an SDR backward compatible transfer function, it is commonly considered that an HLG signal presents similar characteristics as an SDR signal. Therefore, SDR codec parameters are considered to be relevant for HLG.

This approach turns out to be not optimal, and actually, HLG transfer function is notwithstanding quite different to SDR transfer functions, especially when HDR content with large peak luminance is considered (typically above 1000 cd/m2). Just applying SDR codec parameters is not necessarily a relevant approach. Besides, applying the optimal PQ codec parameters is not good either. One noticeable difficulty with HLG is that, contrarily to PQ, it is a relative transfer function wherein statistic distribution of different HLG signals may differ noticeably depending if they are natively scene-referred or display-referred, or depending on the peak luminance of the native linear-light signal. It is therefore required to be able to handle these different cases in the HLG coding/decoding process. A plurality of HLG codec parameters is therefore expected for optimally encoding current HDR content represented with an HLG transfer function. It is desirable to such develop optimal solutions for conversion and coding for HDR/WCG Video with HLG Transfer function or any other HDR/WCG representation format.

3. BRIEF SUMMARY

A method for encoding a block of a picture is disclosed that comprises, for at least one sample of the block and for one current component, encoding the current component of the sample into a bitstream according to codec parameters set for the first representation format; wherein codec parameters for the first representation format are determined from the codec parameters for a second representation format and a first-to-second representation format mapping information; and wherein the first-to-second representation format mapping information is determined from statistics on samples comprising a correspondence for a sample between a component value in the first representation format and a component value in the second representation format.

Advantageously, the method provides a generic process for converting codec parameters adapted to a specific second representation format, for instance HDR video represented using the BT.2100 specification with the PQ transfer function, to codec parameters adapted to another first representation format, for instance HDR video represented using the BT.2100 specification with the HLG transfer function, different peaks luminance and different content gamuts. Thus, the method advantageously reduces the complexity for obtaining the codec parameters optimized for HLG transfer function as the method re-use the techniques developed for HDR/WCG Y'CbCr 4:2:0 Video with PQ Transfer function. To that end, first-to-second mapping information is applied as a conversion process to these codec parameters, based on mapping functions, or tables, or look-up-tables, between these two representation formats. A process for determining these mapping functions is described. In a normative approach, the mapping functions, or tables, or look-up-tables may be specified in the decoder specification, and stored in the decoder as default tables, for specific representation formats expected to be widely deployed. The conversion applies either to mapping functions, that typically apply prior the encoding (from one format to another), and their inverse after the decoding, or to functions that control the quantization, for instance by controlling the local QP adaptation.

A device for encoding a block of a picture represented in a first representation format is disclosed. The device comprises means for encoding a current component of at least one sample of the block into a bitstream according to codec parameters set for the first representation format; and means for determining codec parameters for the first representation format from the codec parameters for a second representation format and a first-to-second representation format mapping information; wherein the first-to-second representation format mapping information is determined from statistics on samples, the statistics comprising a correspondence for a sample between component value in the first representation format and component value in the second representation format.

In variant, an encoding device is disclosed that comprises a communication interface configured to access a block of a picture and at least one processor configured to obtain a current component of at least one sample of the block; encode the current component of the sample into a bitstream according to codec parameters set for the first representation format; wherein codec parameters for the first representation format are determined from the codec parameters for a second representation format and a first-to-second representation format mapping information; and wherein the first-to-second representation format mapping information is determined from statistics on samples, the statistics comprising a correspondence for a sample between component value in the first representation format and component value in the second representation format.

The following embodiments apply to the encoding method, encoding devices disclosed above.

In a first specific and non-limiting embodiment, determining first-to-second representation format mapping information comprises obtaining statistics on samples, the statistic for a sample comprising a correspondence between component value in the first representation format and component value in the second representation format; and deriving the first-to-second representation format mapping information between the first and the second representation format based on the statistics.

In a second specific and non-limiting embodiment, statistics are obtained for one of each sample of a color gamut of the first representation format, or each sample of a training data set in the first representation format.

In a third specific and non-limiting embodiment, deriving the first-to-second mapping information comprises one of an average or a median of the component values in the second representation format corresponding to a determined component value in the first representation format.

In a fourth specific and non-limiting embodiment, codec parameters for the first representation format comprises mapping function parameters, scaling function parameters or a dQP table.

In a firth specific and non-limiting embodiment, a representation format of a picture is defined by a color gamut and transfer function.

According to another aspect, a method for generating codec parameters for a first representation format is also disclosed that comprises:

- obtaining codec parameters for a second representation format;
- determining a first-to-second mapping by obtaining statistics for samples, the statistics comprising a correspondence for a sample between component values in the first representation format and component values in the second representation format and deriving the first-to-second mapping between the first and the second representation format based on the obtained statistics; and
- computing codec parameters for the first representation format from the codec parameters for the second representation format and the first-to-second mapping.

## 4. BRIEF SUMMARY OF THE DRAWINGS

- Figure 1 represents an exemplary architecture of a transmitter configured to encode a picture in a bitstream according to a specific and non-limiting embodiment;
- Figure 2 illustrates an exemplary video encoder, e.g. a HEVC video encoder, adapted to execute the encoding method according to the present principles;
- Figure 3 represents an exemplary architecture of a receiver configured to decode a picture from a bitstream to obtain a decoded picture according to a specific and non-limiting embodiment;

- Figure 4 illustrates a block diagram of an exemplary video decoder, e.g. an HEVC video decoder, adapted to execute the decoding method according to the present principles;
- Figures 5A, 10, 11 and 12 represent flowcharts of a method for encoding a picture block in a bitstream according to various embodiments;
- Figures 6A, 7 and 8 represent flowcharts of a step of the method for encoding a picture block in a bitstream according to various embodiments;
- Figure 6B illustrates various mapping function from HLG to PQ representation with P3 content gamut;
- Figure 9A illustrates an example of a dQP table for a PQ representation format, figure 9B illustrates corresponding scaling function built from the dQP table and figure 9C illustrates corresponding mapping function built from the dQP table.

## 5. DETAILED DESCRIPTION

It is to be understood that the figures and descriptions have been simplified to illustrate elements that are relevant for a clear understanding of the present principles, while eliminating, for purposes of clarity, many other elements found in typical encoding and/or decoding devices. It will be understood that, although the terms first and second may be used herein to describe various elements, these elements should not be limited by these terms. These terms are only used to distinguish one element from another.

A picture is an array of luma samples in monochrome format or an array of luma samples and two corresponding arrays of chroma samples in 4:2:0, 4:2:2, and 4:4:4 colour format. Generally, a "block" addresses a specific area in a sample array (e.g., luma Y), and a "unit" includes the collocated block of all color components (luma Y and possibly chroma Cb and chroma Cr). A slice is an integer number of basic coding units such as HEVC coding tree units or H.264 macroblock units. A slice may consist of a complete picture as well as part thereof. Each slice may include one or more slice segments.

In the following, the word "reconstructed" and "decoded" can be used interchangeably. Usually but not necessarily "reconstructed" is used on the encoder side while "decoded" is used on the decoder side. It should be noted that the term "decoded" or "reconstructed" may mean that a bitstream is partially "decoded" or "reconstructed," for example, the signals obtained after deblocking filtering but before SAO filtering, and the reconstructed samples may be different from the final decoded output that is used for display. We may also use the terms "image," "picture," and "frame" interchangeably. We may also use the terms "sample," and "pixel" interchangeably.

Various embodiments are described with respect to the HEVC standard. However, the present principles are not limited to HEVC, and can be applied to other standards, recommendations, and extensions thereof, including for example HEVC or HEVC extensions like Format Range (RExt), Scalability (SHVC), Multi-View (MV-HEVC) Extensions and H.266. The various embodiments are described with respect to the encoding/decoding of a slice. They may be applied to encode/decode a whole picture or a whole sequence of pictures.

Various methods are described above, and each of the methods comprises one or more steps or actions for achieving the described method. Unless a specific order of steps or actions is required for proper operation of the method, the order and/or use of specific steps and/or actions may be modified or combined.

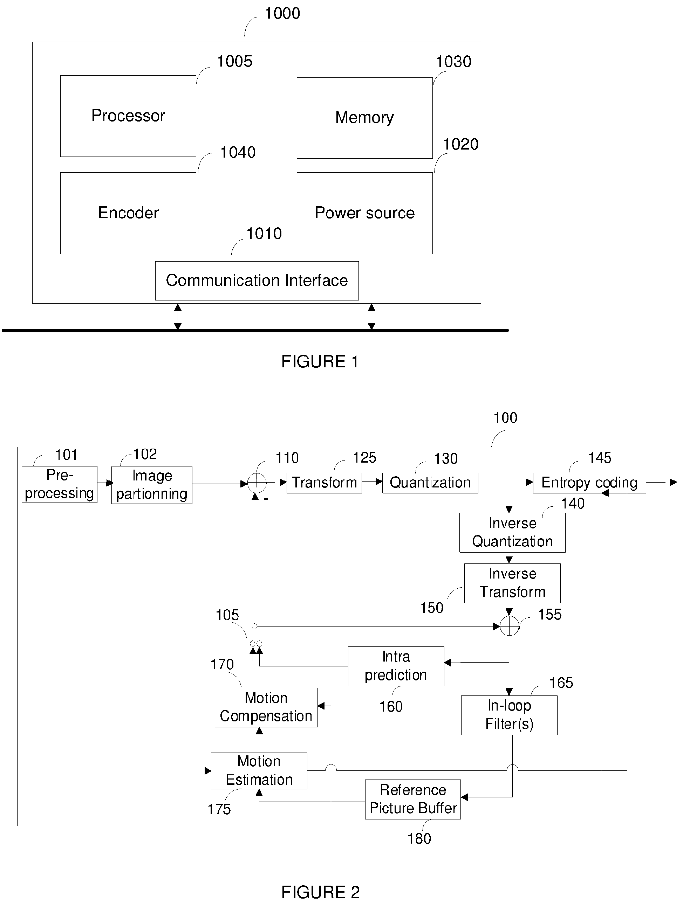

**Figure 1** represents an exemplary architecture of a transmitter 1000 configured to encode a picture in a bitstream according to a specific and non-limiting embodiment.

The transmitter 1000 comprises one or more processor(s) 1005, which could comprise, for example, a CPU, a GPU and/or a DSP (English acronym of Digital Signal Processor), along with internal memory 1030 (e.g. RAM, ROM, and/or EPROM). The transmitter 1000 comprises one or more communication interface(s) 1010 (e.g. a keyboard, a mouse, a touchpad, a webcam), each adapted to display output information and/or allow a user to enter commands and/or data; and a power source 1020 which may be external to the transmitter 1000. The transmitter 1000 may also comprise one or more network interface(s) (not shown). Encoder module 1040 represents the module that may be included in a device to perform the coding functions. Additionally, encoder module 1040 may be implemented as a separate element of the transmitter 1000 or may be incorporated within processor(s) 1005 as a combination of hardware and software as known to those skilled in the art.

The picture may be obtained from a source. According to different embodiments, the source can be, but is not limited to:

- a local memory, e.g. a video memory, a RAM, a flash memory, a hard disk;
- a storage interface, e.g. an interface with a mass storage, a ROM, an optical disc or a magnetic support;
- a communication interface, e.g. a wireline interface (for example a bus interface, a wide area network interface, a local area network interface) or a wireless interface (such as a IEEE 802.11 interface or a Bluetooth interface); and
- a picture capturing circuit (e.g. a sensor such as, for example, a CCD (or Charge-Coupled Device) or CMOS (or Complementary Metal-Oxide-Semiconductor)).

According to different embodiments, the bitstream may be sent to a destination. As an example, the bitstream is stored in a remote or in a local memory, e.g. a video memory or a RAM, a hard disk. In a variant, the bitstream is sent to a storage interface, e.g. an interface with a mass storage, a ROM, a flash memory, an optical disc or a magnetic support and/or transmitted over a communication interface, e.g. an interface to a point to point link, a communication bus, a point to multipoint link or a broadcast network.

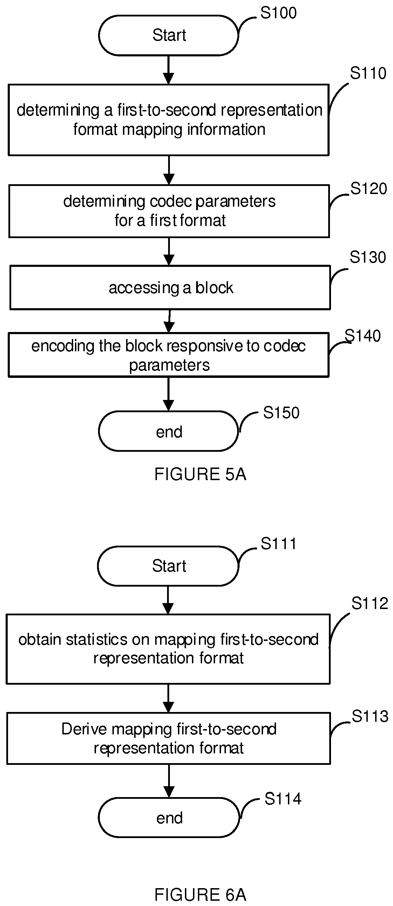

According to an exemplary and non-limiting embodiment, the transmitter 1000 further comprises a computer program stored in the memory 1030. The computer program comprises instructions which, when executed by the transmitter 1000, in particular by the processor 1005, enable the transmitter 1000 to execute the encoding method described with reference to Figures 5A, 10, 11 and 12. According to a variant, the computer program is stored externally to the transmitter 1000 on a non-transitory digital data support, e.g. on an external storage medium such as a HDD, CD-ROM, DVD, a read-only and/or DVD drive and/or a DVD Read/Write drive, all known in the art. The transmitter 1000 thus comprises a mechanism to read the computer program. Further, the transmitter 1000 could access one or more Universal Serial Bus (USB)-type storage devices (e.g., "memory sticks.") through corresponding USB ports (not shown).

According to exemplary and non-limiting embodiments, the transmitter 1000 can be, but is not limited to:

- a mobile device;
- a communication device;
- a game device;
- a tablet (or tablet computer);
- a laptop;
- a still picture camera;
- a video camera;
- an encoding chip or encoding device/apparatus;
- a still picture server; and
- a video server (e.g. a broadcast server, a video-on-demand server or a web server).

**Figure 2** illustrates an exemplary video encoder 100, e.g. a HEVC video encoder, adapted to execute the encoding method according to one of the embodiments of figures 5A, 10, 11 and 12. The encoder 100 is an example of a transmitter 1000 or part of such a transmitter 1000.

For coding an HDR/WCG picture, the HDR/WCG picture is preprocessed to convert a 4:4:4 RGB linear light BT.2020 representation into a YCrCb 4:2:0 representation using a transfer function for example of type Perceptual Quantizer (PQ) or HLG (Hybrid-Log Gamma). Then, for coding, a picture is usually partitioned into basic coding units, e.g. into coding tree units (CTU) in HEVC or into macroblock units in H.264. A set of possibly consecutive basic coding units is grouped into a slice. A basic coding unit contains the basic coding blocks of all color components. In HEVC, the smallest CTB size 16x16 corresponds to a macroblock size as used in previous video coding standards. It will be understood that, although the terms CTU and CTB are used herein to describe encoding/decoding methods and encoding/decoding apparatus, these methods and apparatus should not be limited by these specific terms that may be worded differently (e.g. macroblock) in other standards such as H.264.

In HEVC, a CTB is the root of a quadtree partitioning into Coding Blocks (CB), and a Coding Block is partitioned into one or more Prediction Blocks (PB) and forms the root of a quadtree partitioning into Transform Blocks (TBs). Corresponding to the Coding Block, Prediction Block and Transform Block, a Coding Unit (CU) includes the Prediction Units (PUs) and the tree-structured set of Transform Units (TUs), a PU includes the prediction information for all color components, and a TU includes residual coding syntax structure for each color component. The size of a CB, PB and TB of the luma component applies to the corresponding CU, PU and TU. In the present application, the term "block" or "picture block" can be used to refer to any one of a CTU, a CU, a PU, a TU, a CB, a PB and a TB. In addition, the term "block" or "picture block" can be used to refer to a macroblock, a partition and a sub-block as specified in H.264/AVC or in other video coding standards, and more generally to refer to an array of samples of various sizes.

In the exemplary encoder 100, a picture is encoded by the encoder elements as described below. The picture to be encoded is converted (101) into a representation format compatible with the encoder, for example into a YCrCb 4:2:0 representation using the transfer function HLG (Hybrid-Log Gamma). The picture in a representation format is processed (102) in units of CUs. Each CU is encoded using either an intra or inter mode. When a CU is encoded in an intra mode, it performs intra prediction (160). In an inter mode, motion estimation (175) and compensation (170) are performed. The encoder decides (105) which one of the intra mode or inter mode to use for encoding the CU, and indicates the intra/inter decision by a prediction mode flag. Residuals are calculated by subtracting (110) a predicted sample block (also known as a predictor) from the original picture block. The prediction sample block comprises prediction values, one for each sample of the block.

CUs in intra mode are predicted from reconstructed neighboring samples within the same slice. A set of 35 intra prediction modes is available in HEVC, including a DC, a planar and 33 angular prediction modes. The intra prediction reference is reconstructed from the row and column adjacent to the current block. The reference extends over two times the block size in horizontal and vertical direction using available samples from previously reconstructed blocks. When an angular prediction mode is used for intra prediction, reference samples can be copied along the direction indicated by the angular prediction mode.

The applicable luma intra prediction mode for the current block can be coded using two different options. If the applicable mode is included in a constructed list of three most probable modes (MPM), the mode is signaled by an index in the MPM list. Otherwise, the mode is signaled by a fixed-length binarization of the mode index. The three most probable modes are derived from the intra prediction modes of the top and left neighboring blocks.

For an inter CU, the corresponding coding block is further partitioned into one or more prediction blocks. Inter prediction is performed on the PB level, and the corresponding PU contains the information about how inter prediction is performed.

The motion information (i.e., motion vector and reference index) can be signaled in two methods, namely, "advanced motion vector prediction (AMVP)" and "merge mode". In AMVP, a video encoder or decoder assembles candidate lists based on motion vectors determined from already coded blocks. The video encoder then signals an index into the candidate lists to identify a motion vector predictor (MVP) and signals a motion vector difference (MVD). At the decoder side, the motion vector (MV) is reconstructed as MVP+MVD.

In the merge mode, a video encoder or decoder assembles a candidate list based on already coded blocks, and the video encoder signals an index for one of the candidates in the candidate list. At the decoder side, the motion vector and the reference picture index are reconstructed based on the signaled candidate.

In HEVC, the precision of the motion information for motion compensation is one quarter-sample for the luma component and one eighth-sample for the chroma components. A 7-tap or 8-tap interpolation filter is used for interpolation of fractional-sample sample positions, i.e., 1/4, 1/2 and 3/4 of full sample locations in both horizontal and vertical directions can be addressed for luma.

The residuals are transformed (125) and quantized (130). The quantized transform coefficients, as well as motion vectors and other syntax elements, are entropy coded (145) to output a bitstream. The encoder may also skip the transform and apply quantization directly to the non-transformed residual signal on a 4x4 TU basis. The encoder may also bypass both transform and quantization, i.e., the residual is coded directly without the application of the transform or quantization process. In direct PCM coding, no prediction is applied and the coding unit samples are directly coded into the bitstream.

The encoder comprises a decoding loop and thus decodes an encoded block to provide a reference for further predictions. The quantized transform coefficients are de-quantized (140) and inverse transformed (150) to decode residuals. A picture block is reconstructed by combining (155) the decoded residuals and the predicted sample block. An in-loop filter (165) is applied to the reconstructed picture, for example, to perform deblocking/SAO (Sample Adaptive Offset) filtering to reduce coding artifacts. The filtered picture may be stored in a reference picture buffer (180) and used as reference for other pictures.

In HEVC, SAO filtering may be activated or de-activated at video level, slice level and CTB level. Two SAO modes are specified: edge offset (EO) and band offset (BO). For EO, the sample classification is based on local directional structures in the picture to be filtered. For BO, the sample classification is based on sample values. The parameters for EO or BO may be explicitly coded or derived from the neighborhood. SAO can be applied to the luma and chroma components, where the SAO mode is the same for Cb and Cr components. The SAO parameters (i.e. the offsets, the SAO types EO, BO and inactivated, the class in case of EO and the band position in case of BO) are configured individually for each color component.

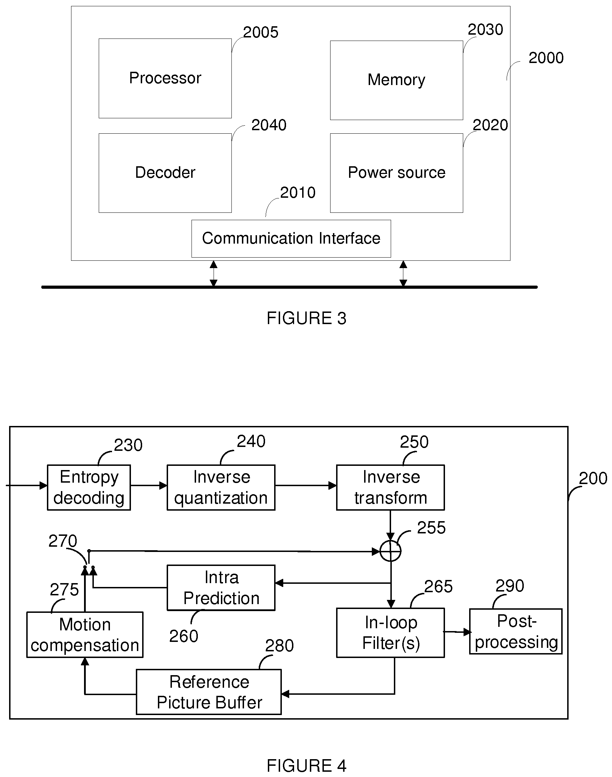

**Figure 3** represents an exemplary architecture of a receiver 2000 configured to decode a picture from a bitstream to obtain a decoded picture according to a specific and non-limiting embodiment.

The receiver 2000 comprises one or more processor(s) 2005, which could comprise, for example, a CPU, a GPU and/or a DSP (English acronym of Digital Signal Processor), along with internal memory 2030 (e.g. RAM, ROM and/or EPROM). The receiver 2000 comprises one or more communication interface(s) 2010 (e.g. a keyboard, a mouse, a touchpad, a webcam), each adapted to display output information and/or allow a user to enter commands and/or data (e.g. the decoded picture); and a power source 2020 which may be external to the receiver 2000. The receiver 2000 may also comprise one or more network interface(s) (not shown). The decoder module 2040 represents the module that may be included in a device to perform the decoding functions. Additionally, the decoder module 2040 may be implemented as a separate element of the receiver 2000 or may be incorporated within processor(s) 2005 as a combination of hardware and software as known to those skilled in the art.

The bitstream may be obtained from a source. According to different embodiments, the source can be, but is not limited to:

- a local memory, e.g. a video memory, a RAM, a flash memory, a hard disk;
- a storage interface, e.g. an interface with a mass storage, a ROM, an optical disc or a magnetic support;

- a communication interface, e.g. a wireline interface (for example a bus interface, a wide area network interface, a local area network interface) or a wireless interface (such as a IEEE 802.11 interface or a Bluetooth interface); and
- an image capturing circuit (e.g. a sensor such as, for example, a CCD (or Charge-Coupled Device) or CMOS (or Complementary Metal-Oxide-Semiconductor)).

According to different embodiments, the decoded picture may be sent to a destination, e.g. a display device. As an example, the decoded picture is stored in a remote or in a local memory, e.g. a video memory or a RAM, a hard disk. In a variant, the decoded picture is sent to a storage interface, e.g. an interface with a mass storage, a ROM, a flash memory, an optical disc or a magnetic support and/or transmitted over a communication interface, e.g. an interface to a point to point link, a communication bus, a point to multipoint link or a broadcast network.

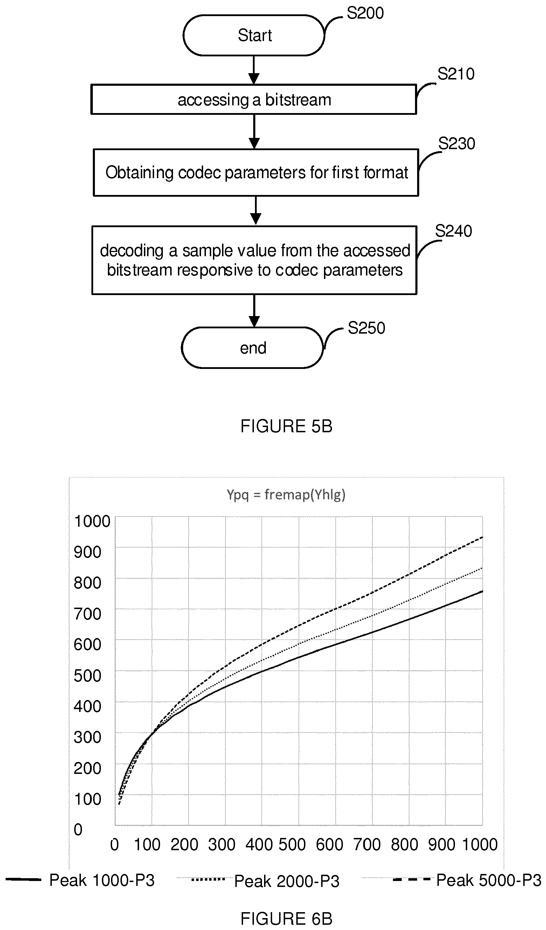

According to a specific and non-limiting embodiment, the receiver 2000 further comprises a computer program stored in the memory 2030. The computer program comprises instructions which, when executed by the receiver 2000, in particular by the processor 2005, enable the receiver to execute the decoding method described with reference to Figure 5B. According to a variant, the computer program is stored externally to the receiver 2000 on a non-transitory digital data support, e.g. on an external storage medium such as a HDD, CD-ROM, DVD, a read-only and/or DVD drive and/or a DVD Read/Write drive, all known in the art. The receiver 2000 thus comprises a mechanism to read the computer program. Further, the receiver 2000 could access one or more Universal Serial Bus (USB)-type storage devices (e.g., "memory sticks.") through corresponding USB ports (not shown).

According to exemplary and non-limiting embodiments, the receiver 2000 can be, but is not limited to:

- a mobile device;
- a communication device;
- a game device;
- a set top box;
- a TV set;
- a tablet (or tablet computer);
- a laptop;
- a video player, e.g. a Blu-ray player, a DVD player;
- a display; and
- a decoding chip or decoding device/apparatus.

**Figure 4** illustrates a block diagram of an exemplary video decoder 200, e.g. an HEVC video decoder, adapted to execute the decoding method according to one embodiment of figures 5B. The video decoder 200 is an example of a receiver 2000 or part of such a receiver 2000. In the exemplary decoder 200, a bitstream is decoded by the decoder elements as described below. Video decoder 200 generally performs a decoding pass reciprocal to the encoding pass as described in Figure 2, which performs video decoding as part of encoding video data.

In particular, the input of the decoder includes a video bitstream, which may be generated by the video encoder 100. The bitstream is first entropy decoded (230) to obtain transform coefficients, motion vectors, and other coded information. The transform coefficients are de-quantized (240) and inverse transformed (250) to decode residuals. The decoded residuals are then combined (255) with a predicted sample block (also known as a predictor) to obtain a decoded/reconstructed picture block. The predicted sample block may be obtained (270) from intra prediction (260) or motion-compensated prediction (i.e., inter prediction) (275). As described above, AMVP and merge mode techniques may be used during motion compensation, which may use interpolation filters to calculate interpolated values for sub-integer samples of a reference block. An in-loop filter (265) is applied to the reconstructed picture. The in-loop filter may comprise a deblocking filter and a SAO filter. The filtered picture is stored at a reference picture buffer (280) and output for post-processing (290) before being sent to an HDR-compatible display.

**Figure 5A** represents a flowchart of a method for encoding a picture block in a bitstream according to the present principles. According to a salient idea, first-to-second mapping information is applied as a conversion process to the second codec parameters to determine the first codec parameters. As opposed to the prior art, notably when the first representation format is defined by HLG Transfer function and BT.2020 color primaries or P3D65 color primaries the encoding method does not use codec parameters set for an SDR representation format nor set for a second representation format being defined by PQ Transfer function and BT.2020 color primaries, but the encoding method derives optimal codec parameters from the ones set for second representation format by a simple conversion step. On the decoder side, the codec parameters are decoded using some information on codec parameters transmitted by the encoder.

The following embodiments are described for a second representation format being defined by PQ Transfer function and BT.2020 color primaries and HLG Transfer function with BT.2020 color primaries, P3D65 color primaries, BT.2020 color primaries and various peak luminance. However, the present principles are compatible with any OETF or content gamut handling HDR/WCG content, being called first representation format.

The mapping information may apply to one or several components of the picture. For instance, it may apply to the luma component only, or to the chroma components only, or to the luma and chroma components.

The method starts at step S100. According to a preliminary step S110, a mapping information between a first representation format and a second representation format is determined from statistics on color samples. The statistics comprise a correspondence, for a sample, between a component value of the sample in a first representation format and a component value of the sample in a second representation format. This step S110 is described with more details in the following of the description with respect to figures 6A, 6B, 7 and 8.

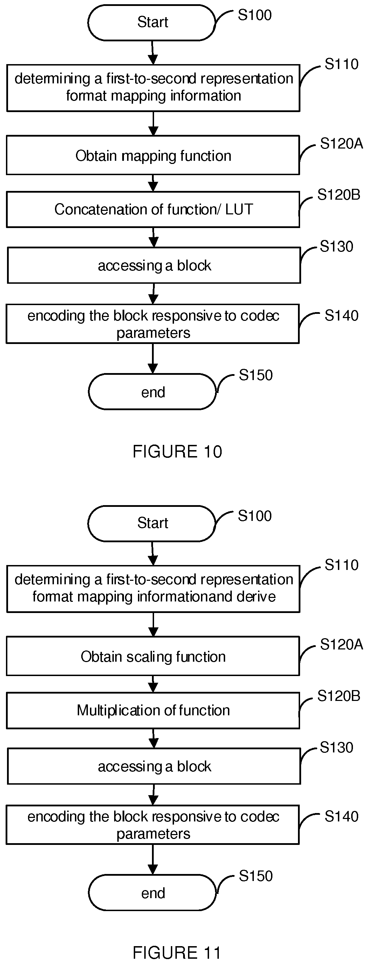

According to another preliminary step S120, the codec parameters for the first representation format are determined responsive to codec parameters for the second representation format and to the mapping information between a first representation format and a second representation format. This step S120 is described for various embodiments of codec parameters in the following of the description with respect to figures 10, 11 and 12.

At step S130, a transmitter 1000, e.g. such as the encoder 100, accesses a block of a picture slice.

At step S140, the transmitter determines a part of an encoded bitstream for the sample for the input value of the sample represented in the first representation format and responsive to the determined codec parameters. Encoding the block usually but not necessarily comprises pre-processing the block to map or scale samples in a representation format compatible with encoding, obtaining a predictor and residual for the block, transforming residuals into transform coefficients, quantizing the coefficients with a quantization step size QP to obtain a quantized coefficients and entropy coding the quantized coefficients in the bitstream.

The steps S130 and S140 may be repeated for each sample of the accessed block in order to obtain an encoded bitstream.

The method ends at step S150.

**Figure 5B** represents a flowchart of a method for decoding a picture block in a bitstream that corresponding to the encoding method of figure 5A.

The method starts at step S200. At step S210, a receiver 2000 such as the decoder 200 accesses a bitstream.

At step S230, the receiver obtains the codec parameters for the first representation format based on the transmitted information from the encoder.

At step S240, the receiver decodes the bitstream. Decoding usually but not necessarily comprises entropy decoding a portion of the bitstream representative of a block to obtain a block of transform coefficients, de-quantizing and inverse transforming the block of transform coefficients to obtain a block of residuals, combining residuals with a predicted sample block (also known as a predictor) to obtain a decoded/reconstructed picture block, and post-processing the decoded/reconstructed picture block for display.

The steps S230 and S240 may be repeated for each sample of the accessed block.

The method ends at step S250.

**Figure 6A** represents a flowchart of the step for determining a first-to-second representation format mapping information in a method for encoding a picture block in a bitstream according to a first specific and non-limiting embodiment. Advantageously, the step for determining a first-to-second representation format mapping information is also compatible with a method for generating codec parameters.

The method starts at step S111. At step S112, a transmitter 1000, e.g., obtain statistics of the mapping of component values in the first representation format to component values in the second representation format. Obtaining statistics comprise for a sample obtaining a first component value of the sample for a first representation format (for instance HLG with $1000cd/m^2$ peak luminance and P3 color gamut) and a second component value of the same sample for a second representation format (for instance PQ and BT2020 color gamut). Thus, a correspondence between a first component value of the sample in a first representation format and a second component value of the same sample in a second representation format is obtained. For instance, statistics comprises a set of mapped color components values wherein for the sample k=0,1,..N, N being the number of total samples processed in step S112 the following values are stored :

$$\{Ysecond(k), Usecond(k), Vsecond(k), Yfirst(k), Ufirst(k), Vfirst(k)\}$$

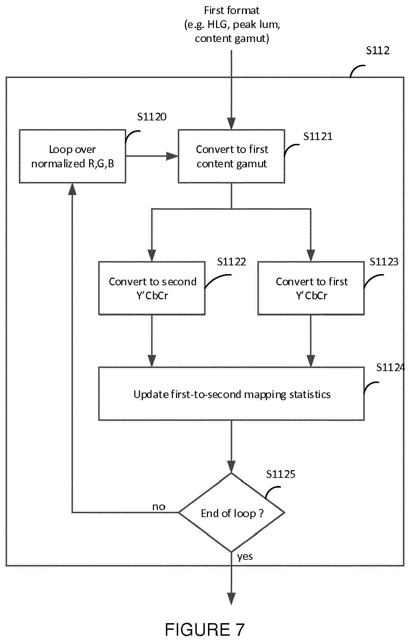

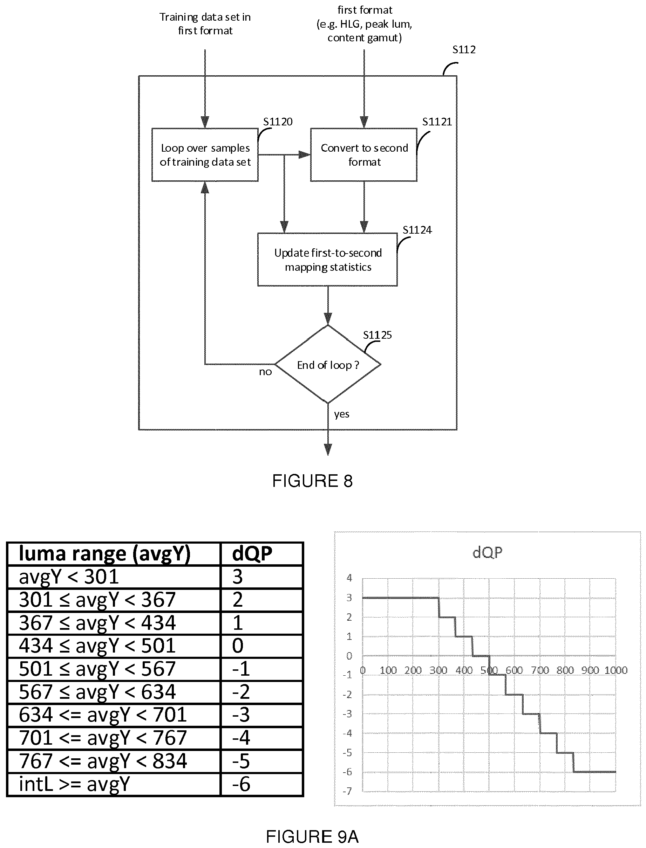

It should be noticed that a plurality of component values in a format may correspond to a single component value in another format. At least 2 embodiments for obtaining such statistics are described with figures 7 and 8.

At step S113, the mapping information between the first and the second representation is derived based on the obtained statistics. The mapping information is for instance in a form of a mapping table. Considering the luma component, noted Y, a first method for deriving the mapping tables from first-to-second values is to compute, for all k such that $Y_{first}(k) = Y$, the average of the corresponding $Y_{second}(k)$:

$$\mathrm{LUT}_{\text{scalFirst-to-Second}}[Y] = \frac{\sum_{k\in\Omega_Y} Y_{second}(k)}{card(\Omega_Y)}$$

Wherein $\Omega_Y = \{k \mid Y_{first}(k) = Y\}$ and card denotes the function cardinal which returns the number of samples in a collection.

A second method for deriving the mapping tables from first-to-second values is to compute a robust estimator instead of using the average, such as for instance the median estimator:

$$\mathrm{LUT}_{\text{scalFirst-to-Second}}[Y] = median_{k\in\Omega_Y}\left(Y_{second}(k)\right)$$

In an optional step, a post-filtering such as smoothing can be applied to the computed table. Such derivation is easily adaptable to other color component such as chroma components. **Figure 6B** illustrates an example of mapping information, here 3 mapping functions (also called remapping function between different formats) resulting from step S112 for a luma component in a first representation format, being HLG representation, to a second representation format, being a PQ representation, for different HLG peaks luminance, i.e. 1000 cd/m$^2$, 2000 cd/m$^2$, 5000 cd/m$^2$, and considering an HLG content gamut corresponding to P3.

Various embodiments of step S120 wherein mapping information is processed for determining codec parameters are described in non-limiting embodiments with Figures 10, 11 and 12.

**Figure 7** illustrates a first embodiment for the step S112 for obtaining statistics. In this embodiment, a systematic scanning of possible color values in the considered content gamut is performed to obtain the statistics.

At step S1120, a loop on linear R,G,B values is applied wherein a value of a component is a normalized value i.e. the values of a component are typically coded between 0.0 (representing no light) and 1.0 (representing the considered peak luminance). In a non-limiting example, for instance represented on figure 6B, the first representation format is defined by a HLG transfer function, by a peak luminance display of 1000 cd/m$^2$, and a P3 color gamut.

At step S1121, given the first content gamut, for instance any of BT.2020, P3 or BT.709, a conversion of the RGB values is applied to obtain a modified R,G,B sample in the first content gamut i.e. BT.2020 color gamut.

A 3x3 matrix multiplication is applied to the R,G,B values. The matrix depends on the first content gamut. If the content gamut is BT.2020, the matrix is the identity matrix. If the first content gamut is P3, the matrix is as follows:

$$\text{MP3to2020} = [0.753832968 \quad 0.198597718 \quad 0.047569212;$$
$$0.045744762 \quad 0.941778001 \quad 0.012478838;$$
$$-0.001210378 \quad 0.017601065 \quad 0.983608328];$$

If the content gamut is BT.709, the matrix is as follows:

$$\text{M709to2020} = [0.627404194 \quad 0.329282188 \quad 0.043313618;$$
$$0.069097349 \quad 0.919541368 \quad 0.011361283;$$
$$0.016391589 \quad 0.088013228 \quad 0.895595182];$$

These matrices are derived following the process described in SMPTE recommendation RP 177.

At step S1122 and S1223, the modified RGB values are then converted according to the second representation format and to the first representation (typically using in both cases the HLG peak luminance as input) as described for instance in the Rec. ITU-R BT.2100. In other words, in step S1122, the second transfer function, for instance the PQ, is applied to the modified RGB values, scaled by the first peak luminance, for instance 1000cd/m$^2$, divided by the absolute peak luminance of the PQ which is 10000cd/m$^2$. For example, when the first peak luminance, for instance 1000cd/m$^2$, the scaling is equal to 0.1. Similarly, in step S1122, the first transfer function, here the HLG, is applied to the modified RGB values. For HLG, no scaling is applied because HLG is a relative transfer function (the normalized value of 1 corresponds to the peak luminance). If the representation is in Y'CbCr color representation, a conversion from R'G'B' (non-linear RGB) to Y'CbCr also applies in these two steps. Typically, this is done by applying the 3x3 matrix:

$$M2020toYCbCr = [\quad 0.26270 \qquad 0.678000 \qquad 0.059300;$$
$$-0.13963 \qquad -0.360370 \qquad 0.500000;$$
$$0.50000 \qquad -0.459786 \qquad -0.040214];$$

A value of components for first representation format and a value of components for second representation format are obtained. In a non-limiting example, a first Y'CbCr value for HLG and a second Y'CbCr value for PQ are obtained. Such values are statistics according to the present principles.

At step S1124, statistics related to the mapping of the converted RGB values in the second and in the first representation format are stored. Namely, for each color component, the mapped value in the second representation format of the value in the first representation format is stored.

At step S1124, If the loop on input R,G,B values is not finished, it is continued with a next RGB value; otherwise, the process is stopped and statistics between the 2 formats are obtained.

**Figure 8** illustrates a second embodiment for the step S112 for obtaining statistics. In this embodiment, a training data set, that is, a large set of pictures or videos, in the first representation format, are used to obtain the statistics. As for exhaustive content gamut scanning, a scanning of all the samples of these training data set is performed. In this case, the input samples are Y'CbCr samples, or possibly R'G'B' samples, of HLG content.

At step S1120, a loop over the Y'CbCr (or R'G'B') values of the samples of the training data set is applied.

At step S1121, the color samples natively belonging to the first representation format are converted into a Y'CbCr representation with the transfer function of the second representation format. To perform this conversion, the following applies. The normalized Y'CbCr samples in the first representation format are converted to R'G'B' samples by applying the conversion matrix from Y'CbCr to R'G'B'. This is the inverse matrix of the matrix M2020toYCbCr. This step is not required if the input data are already in R'G'B' format. Then the EOTF associated with the first representation format is applied to the R'G'B' samples to get the RGB samples. The RGB samples are then converted to the second representation format, as done in step S1122 of the embodiment of figure 7. In other words, the second transfer function, for instance the PQ, is applied to the linear-light RGB values to obtain R'G'B' values (non-linear RGB). If the representation is in Y'CbCr color representation, a conversion from R'G'B' to Y'CbCr is also applied in these two steps. Typically, this is done by applying the 3x3 matrix:

$$M2020toYCbCr = [\quad 0.26270 \qquad 0.678000 \qquad 0.059300;$$
$$-0.13963 \qquad -0.360370 \qquad 0.500000;$$
$$0.50000 \qquad -0.459786 \qquad -0.040214];$$

At step S1124, statistics related to the mapping of the sample in the first representation format into a second representation format are stored. Namely, for each color component, the mapped value in the second representation format of the value in the first representation format is stored.

At step S1125, if the loop on samples is not finished, it is continued with a next sample of the training data set; otherwise, the process is stopped and statistics between the 2 formats are obtained.

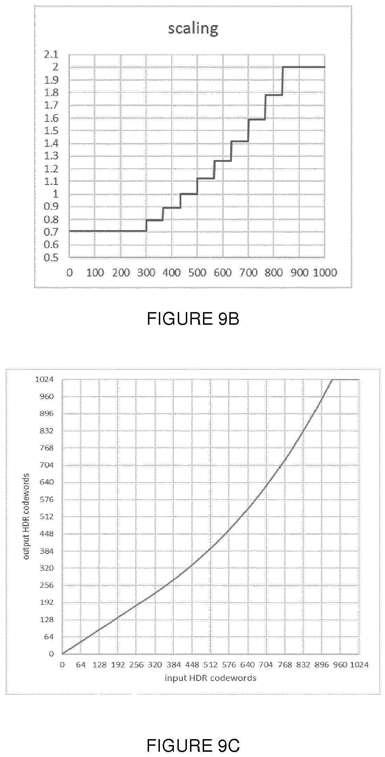

Now, 3 different embodiments of the codec parameters are described with **Figures 9A, 9B and 9C.**

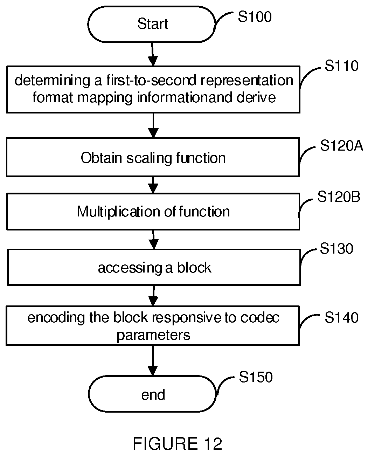

In the Technical Report ISO/IEC 23008-14 (2017), "Conversion and Coding Practices for HDR/WCG Y'CbCr 4:2:0 Video with PQ Transfer Characteristics", methods are described for improving the encoding of HDR/WCG video signals obtained with PQ. The skilled in the art of encoding/decoding video signals knows that, in an encoder the quantization is tuned using a Quantization Parameter QP. From the QP, a quantization step, Qstep0 is derived and can be approximated as $(K * 2^{(QP/6)})$ where K is a fixed parameter. A first disclosed solution for improving encoding of HDR/WCG signals consist in tuning the quantization is using a local QP correction depending on luma component of the HDR/WCG video. When a local QP correction, dQP, is used, the actual quantization step, Qstep1, can be approximated as $(K * 2^{((QP+dQP)/6)})$, that is $(Qstep0 * 2^{(dQP/6)})$. The transform coefficients signal of the prediction residual is divided by the quantization step. This means that, for a given dQP, the corresponding scaling, derived from the inverse of the quantization step, applied to the signal in the quantization corresponds to $2^{(-dQP/6)}$. A typical table for a 10-bit signal applicable for HDR/WCG Y'CbCr 4:2:0 Video with PQ Transfer Characteristics is plotted in Figure 9A. Of course, at the decoder side, an inverse scaling applies (by inverse quantization). The dQP values are either explicitly coded in the stream (in a non-normative approach), or a dQP table can be stored in or sent to the decoder, which performs the computation of the average luma of the blocks to deduce the dQP values (normative approach). The dQP approach is described with respect to the third embodiment of coding parameters with figure 12.

The scaling may be used on the sample as described for instance in the second embodiment of the coding parameters with figure 11 and illustrated on figure 9B. The scaling may also be used to derive a mapping function as used in the first embodiment of coding parameters with figure 10. Thus, according to a second solution for improving encoding of HDR/WCG signals, a mapping is directly applied to the input signal before the encoding, and an inverse mapping of the decoded signal after decoding is performed. Typically, a remapping function based on the dQP table above can easily be built as follows. Indeed, the scaling corresponds to the derivative of the mapping function. Therefore, the mapping function may be modeled as a piece-wise linear function where each piece has a slope equal to the scaling corresponding to this piece.

If the dQP table is defined as a set of intervals $[Y_i, Y_{i+1} - 1]$ with dQP value $dQP_i$ associated with each interval, for $i=0$ to $n$, $n$ being an integer, the mapping function may be defined as follows.

Let $i$ be the index of the interval containing $Y$ ($Y$ is in $[Y_i, Y_{i+1} - 1]$).

$$f_{map}(Y) = f_{map}(Y_i) + 2^{\wedge}(-dQP_i/6) * (Y - Y_i)$$

This gives the function shown in the figure 9C for Full Range signal representations for the specific dQP table of Figure 9A. The functions $f_{map}$ or $f_{scal}$ or their inverse functions $invf_{map}$ or $invf_{scal}$ may be either explicitly defined in decoder (and therefore in the decoder specification), or signaled in the bitstream.

The functions $f_{map}$, $invf_{map}$, $f_{scal}$ or $invf_{scal}$ may be implemented in the shape of :

- look-up-tables,
- piece-wise scalar functions (PWS),
- piece-wise linear functions (PWL),
- piece-wise polynomial functions (PWP).

They may be coded in SEI message, in Sequence Parameter Sets (SPS), Picture Parameter Sets (PPS), in slice header, in Coding Tree Unit (CTU) syntax, per Tile, or in new structure such as Adaptation Picture Sets (APS).
An example of syntax and semantics for the mapping function is provided in the table below. Scaling tables or dQP tables can be signaled in a similar way.

| | |
|---|---|
| **remap_lut_present_flag** | u(1) |
| if( remap_lut_present_flag ) { | |
| **remap_lut_num_val_minus1** | u(8) |
| if( remap_lut_num_val_minus1 > 0 ) | |
| for( i = 0; i  <=  remap_lut_num_val_minus1; i++ ) { | |
| **remap_lut_coded_value**[ i ] | u(v) |
| } | |

In addition to the above syntax that could be added in the SPS or PPS, the following syntax could be added in case of usage of an SEI message.

| remap_video_signal_info_present_flag | u(1) |
|---|---|
| if( remap_video_signal_info_present_flag ) { | |
| remap_full_range_flag | u(1) |
| remap_primaries | u(8) |
| remap_transfer_function | u(8) |
| remap_matrix_coefficients | u(8) |
| } | |
| remap_input_bit_depth | u(8) |
| remap_output_bit_depth | u(8) |

In another embodiment related to the decoder, the first inverse mapping tables, or the inverse scaling tables, or the dQP tables, resulting from the process of step 110 can be specified and implemented for various actual settings in the decoder.

**Figure 10** represents a flowchart of a method for encoding a picture block in a bitstream according to a first specific and non-limiting embodiment wherein the codec parameters correspond to parameters of second (re)mapping functions. For instance, Technical Report ISO/IEC 23008-14 (2017), "Conversion and Coding Practices for HDR/WCG Y'CbCr 4:2:0 Video with PQ Transfer Characteristics" describes a dQP table to be used for PQ signal. From this table, a PQ mapping function modeled by 1D-LUT $LUT_{mapSecond}[x]$, x being a value for instance from 0 to 1023 for a 10-bit signal, can be derived as explained above for the function $f_{map}$. Accordingly, in this first embodiment, the codec parameters correspond to second mapping functions.

The method starts at step S100. As previously disclosed, in step S110, a mapping information between a first representation format and a second representation format is determined from statistics on samples. Accordingly, a mapping function from first (here HLG) to second (here PQ) representation has been generated. This mapping function can also be modeled by a 1D LUT noted $LUT_{mapFirst-to-Second}[x]$.

In step S120A, the codec parameters for the second representation format, here the parameters of the second mapping LUT $LUT_{mapSecond}[x]$, are obtained. For instance, they are pre-defined in the encoder following Technical Report ISO/IEC 23008-14. Then the parameters of first mapping LUT named $LUT_{mapFirst}[x]$ determined from the second mapping LUT $LUT_{mapSecond}[x]$ are obtained by a concatenation step S120B as follows:

$$LUT_{mapFirst}[x] = LUT_{mapSecond}[LUT_{mapFirst-to-Second}[x]].$$

In a variant where mapping functions f are used instead of modeling LUTs:

$$f_{mapFirst}(x) = f_{mapSecond}(f_{mapFirst-to-Second}(x)).$$

Thus the process for determining the LUT $LUT_{mapFirst}$ is defined. This can then be used to map a signal in the first representation format, before its encoding. This will typically result in coding performance improvements

At step S130, a transmitter 1000, e.g. such as the encoder 100, accesses a block of a picture slice. According to the first embodiment, a pre-processing function $f_{mapFirst}(Y)$, where Y is luma video signal, or the derivative of $f_{mapFirst}(Y)$ which is a scaling function, may be used as codec parameters. The pre-encoder function $f_{mapFirst}(Y)$ is derived so that the original samples of the signal, once mapped by this pre-encoder function $f_{mapFirst}(Y)$, are better distributed in the overall codewords range (for instance, thanks to an histogram equalization). The mapping function is for instance represented on figure 9C. Thus, according to the present principles, the mapping function for the first format $f_{mapFirst}$, respectively the corresponding modeling $LUT_{mapFirst}$, is determined responsive to codec parameter $f_{mapSecond}$ and mapping information $f_{mapFirst-to-Second}$, respectively LUTmapsecond and mapping information in form of a table $LUT_{mapFirst-to-Second}[x]]$.

At step S140, the transmitter determines a part of an encoded bitstream for the sample for the pre-encoded input value of the sample represented in the first representation format and responsive to the determined codec parameters.

**Figure 11** represents a flowchart of a method for encoding a picture block in a bitstream according to a first specific and non-limiting embodiment wherein the codec parameters correspond to parameters of a scaling function for second representation format. Such scaling function is the derivative function of the mapping function of figure 10. For instance, Technical Report ISO/IEC 23008-14 (2017), "Conversion and Coding Practices for HDR/WCG Y'CbCr 4:2:0 Video with PQ Transfer Characteristics" describes a dQP table to be used for PQ signal. From this table, a PQ mapping function modeled by 1D-LUT $LUT_{mapSecond}[x]$, x being a value for instance from 0 to 1023 for a 10-bit signal, can be derived as explained above for the function $f_{map}$. The derivative of this mapping function $LUT_{mapSecond}[x]$ results in a PQ scaling function modeled by 1D-LUT $LUT_{ScalSecond}[x]$, x being a value for instance from 0 to 1023 for a 10-bit signal. Accordingly, in this second embodiment, the codec parameters correspond to scaling functions.

The method starts at step S100. As previously disclosed, in step S110, a mapping information between a first representation format and a second representation format is determined from statistics on samples. Accordingly, a mapping function $f_{mapFirst-to-Second}[x]$ from first (here HLG) to second (here PQ) representation has been generated. This mapping function can also be modeled by a LUT noted $LUT_{mapFirst-to-Second}[x]$.

In step S120A, the codec parameters for the second representation format, here the parameters of the second scaling LUT $LUT_{ScalSecond}[x]$, are obtained. Then the parameters of first scaling LUT named $LUT_{ScalFirst}[x]$ based on the second scaling LUT $LUT_{ScalSecond}[x]$ are obtained by a derivation and multiplication step S120B. Firstly, the derivative of mapping function $f_{mapFirst-to-Second}$ from first to second representation is computed and named $f_{ScalFirst-to-Second}[x]$. Such scaling function can also be modeled by a LUT $LUT_{scalFirst-to-Second}[x]$. Secondly, the first scaling LUT $LUT_{scalFirst}[x]$ is computed as follows :

$$LUT_{ScalFirst}\left[\,x\,\right] = LUT_{scalSecond}\left[\,LUT_{rmapFirst-to-Second}\left[\,x\,\right]\,\right] * LUT_{scalFirst-to-Second}\left[\,x\,\right].$$

In a variant where mapping functions f are used instead of modeling LUTs:

$$f_{scalFirst}\left[\,x\,\right] = f_{scalSecond}\left[\,f_{mapFirst-to-Second}\left(\,x\,\right)\,\right] * f_{scalFirst-to-Second}\left[\,x\,\right].$$

At step S130, a transmitter 1000, e.g. such as the encoder 100, accesses a block of a picture slice. According to the second embodiment, a pre-encoder scaling function $f_{ScalFirst}(Y)$ is applied to component, being luma or chroma component, being the derivative of $f_{mapFirst}(Y)$, may be used as codec parameters. The component Y is used in this case, but another component can be used. Thus, according to the present principles, the scaling function for the first format $f_{ScalFirst}$, respectively the corresponding modeling $LUT_{ScalFirst}$, is determined responsive to codec parameter $f_{ScalSecond}$ and mapping information $f_{mapFirst-to-Second}$, respectively $LUT_{ScalSecond}$ and mapping information.

At step S140, the transmitter determines a part of an encoded bitstream for the sample for the pre-encoded input value of the sample represented in the first representation format and responsive to the determined codec parameters.

**Figure 12** represents a flowchart of a method for encoding a picture block in a bitstream according to a third specific and non-limiting embodiment wherein the codec parameters correspond to dQP values for second representative format. Such $dQP_{second}$ function is for instance represented on table and plot of Figure 9A. For instance, Technical Report ISO/IEC 23008-14 (2017), "Conversion and Coding Practices for HDR/WCG Y'CbCr 4:2:0 Video with PQ Transfer Characteristics" describes a dPQ function modeled by a table dQPSecond[x], x being a value for instance from 0 to 1023 for a 10-bit signal. Accordingly, in this third embodiment, the codec parameters correspond to parameters or offset of the dQP table.

The method starts at step S100. As previously disclosed, in step S110, a mapping information between a first representation format and a second representation format is determined from statistics on samples. Accordingly, a mapping function fmapFirst-to-Second[x] from first (here HLG) to second (here PQ) representation has been generated. This mapping function can also be modeled by a LUT noted LUTmapFirst-to-Second[x].

In step S120A, the codec parameters for the second representation format, here the dQP table dQPSecond[x], are obtained. Then the parameters of first dQP table named dQPFirst[x], and based on the dQP table dQPSecond[x], are obtained by a derivation and addition step S120B. Firstly, the derivative of mapping function fmapFirst-to-Second from first to second representation, being the scaling function, is computed fscalFirst-to-Second[x]. Besides, since the scaling value S for a given dQP is approximated by the formula:

$$S = 2^{-dQP/6}$$

Secondly, the dQP value dQPFirst-to-Second[x] is computed as follows :

$$dQPFirst\text{-}to\text{-}second\,[\,x\,] = \mathrm{Round}(\,-6 * \ln(\,S\,)/\ln(2)\,)$$

where Round(a) returns the closest integer value of a.

Then the resulting dQP value is then added to the dQPsecond value of second format to obtain the dQPfirst value as follows: dQPFirst [x] = dQPSecond [LUTmapFirst-to-Second[x]] + dQPFirst-to-Second[x]

At step S130, a transmitter 1000, e.g. such as the encoder 100, accesses a block of a picture slice. According to the third embodiment, a pre-encoder scaling function fscalFirst (Y) is applied to component, being luma or chroma component, being the derivative of fmapFirst (Y), may be used as codec parameters. The component Y is used in this case, but another component can be used. Thus, according to the present principles, the scaling function for the first format fscalFirst, respectively the corresponding modeling LUTscalFirst, is determined responsive to codec parameter fscalSecond and determined responsive to codec parameter $f_{ScalSecond}$ and mapping information $f_{mapFirst\text{-}to\text{-}Second}$, respectively $LUT_{ScalSecond}$ and mapping information.

At step S140, the transmitter determines a part of an encoded bitstream for the sample for the pre-encoded input value of the sample represented in the first representation format and responsive to the determined codec parameters.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Implementations of the various processes and features described herein may be embodied in a variety of different equipment or applications, particularly, for example, equipment or applications. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

**Claims**

1. A method for encoding a block of a picture represented in a first representation format comprising for at least one sample of the block and for one current component:

    - Encoding (S140) the current component of the sample into a bitstream according to codec parameters set for said first representation format;

    wherein said codec parameters for the first representation format are determined from codec parameters for a second representation format and from a first-to-second representation format mapping information; and wherein said first-to-second representation format mapping information is determined from statistics on samples, said statistics comprising a correspondence for a sample between a component value in the first representation format and a component value in the second representation format.

2. The method of claim 1 wherein said first-to-second representation format mapping information are determined (S110) by:

    - Obtaining (S112) statistics on samples, said statistics for a color sample comprising a correspondence between a component value in the first representation format and component value in the second representation format;
    - Deriving (S113) the first-to-second representation format mapping information between the first and the second representation format based on the statistics.

3. The method of claim 2 wherein obtaining statistics (S112) for color samples is applied to one of :

    • each sample of a color gamut of the first representation format;
    • each sample of a training data set in the first representation format.

4. The method of claim 2 wherein deriving (S113) the first-to-second mapping information comprising one of an average or a median of the component values in the second representation format corresponding to a determined component value in the first representation format.

5. The method of claim 1 wherein determining (S120) codec parameters for the first representation format comprises determining parameters of one of a mapping function, a scaling function or a dQP table.

6. The method of claim 1 wherein a representation format of a picture is defined by a color gamut and transfer function.

7. A device for encoding a block of a picture represented in a first representation format comprising:

    - Means for encoding a current component of at least one sample of the block into a bitstream according to codec parameters set for said first representation format;
    - Means for determining codec parameters for the first representation format from the codec parameters for a second representation format and a first-to-second representation format mapping information; wherein said first-to-second representation format mapping information is determined from statistics on color samples, said statistics comprising a correspondence for a color sample between a component value in the first representation format and a component value in the second representation format.

8. The device of claim 7 wherein said means for determining codec parameters for the first representation format comprises:

    - Means for obtaining statistics on samples, said statistic for a sample comprising a correspondence between a component value in the first representation format and a component value in the second representation format;

- Means for deriving the first-to-second representation format mapping information between the first and the second representation format based on the statistics.

9.  The device of claim 8 wherein statistics for samples are obtained for one of :

    • each sample of a color gamut of the first representation format;
    • each sample of a training data set in the first representation format.

10.  The device of claim 8 wherein the first-to-second mapping information are derived by one of an average or a median operator applied to the component values in the second representation format corresponding to a determined component value in the first representation format.

11.  The device of claim 7 wherein codec parameters for the first representation format comprises parameters of one of a mapping function, a scaling function or a dQP table.

12.  The device of claim 7 wherein a representation format of a picture is defined by a color gamut and transfer function.

1000

Processor 1005

Memory 1030

Encoder 1040

Power source 1020

Communication Interface 1010

FIGURE 1

100

101 Pre-processing

102 Image partionning

110

125 Transform

130 Quantization

145 Entropy coding

140 Inverse Quantization

150 Inverse Transform

155

105

170 Motion Compensation

Intra prediction 160

165 In-loop Filter(s)

175 Motion Estimation

180 Reference Picture Buffer

FIGURE 2

2005

Processor

2030

Memory

2000

2040

Decoder

2010

2020

Power source

Communication Interface

FIGURE 3

230

Entropy
decoding

240

Inverse
quantization

250

Inverse
transform

200

255

270

Intra
Prediction

265

290

275

Motion
compensation

260

In-loop
Filter(s)

Post-
processing

280

Reference
Picture Buffer

FIGURE 4

S100

Start

S110

determining a first-to-second representation
format mapping information

S120

determining codec parameters
for a first format

S130

accessing a block

S140

encoding the block responsive to codec
parameters

S150

end

FIGURE 5A

S111

Start

S112

obtain statistics on mapping first-to-second
representation format

S113

Derive mapping first-to-second
representation format

S114

end

FIGURE 6A

FIGURE 5B

FIGURE 6B

First format
(e.g. HLG, peak lum,
content gamut)

S112

S1120 — Loop over normalized R,G,B

S1121 — Convert to first content gamut

S1122 — Convert to second Y'CbCr

S1123 — Convert to first Y'CbCr

S1124 — Update first-to-second mapping statistics

S1125 — End of loop ?

no

yes

FIGURE 7

Training data set in
first format

first format
(e.g. HLG, peak lum,
content gamut)

S112

S1120

Loop over samples
of training data set

S1121

Convert to second
format

S1124

Update first-to-second
mapping statistics

S1125

End of loop?

no

yes

FIGURE 8

| luma range (avgY) | dQP |
|---|---|
| avgY < 301 | 3 |
| 301 ≤ avgY < 367 | 2 |
| 367 ≤ avgY < 434 | 1 |
| 434 ≤ avgY < 501 | 0 |
| 501 ≤ avgY < 567 | -1 |
| 567 ≤ avgY < 634 | -2 |
| 634 <= avgY < 701 | -3 |
| 701 <= avgY < 767 | -4 |
| 767 <= avgY < 834 | -5 |
| intL >= avgY | -6 |

dQP

4
3
2
1
0
-1    0    100  200  300  400  500  600  700  800  900  1000
-2
-3
-4
-5
-6
-7

FIGURE 9A

FIGURE 9B

FIGURE 9C

Start — S100

determining a first-to-second representation format mapping information — S110

Obtain mapping function — S120A

Concatenation of function/ LUT — S120B

accessing a block — S130

encoding the block responsive to codec parameters — S140

end — S150

FIGURE 10

Start — S100

determining a first-to-second representation format mapping information and derive — S110

Obtain scaling function — S120A

Multiplication of function — S120B

accessing a block — S130

encoding the block responsive to codec parameters — S140

end — S150

FIGURE 11

Start — S100

↓

determining a first-to-second representation format mapping information and derive — S110

↓

Obtain scaling function — S120A

↓

Multiplication of function — S120B

↓

accessing a block — S130

↓

encoding the block responsive to codec parameters — S140

↓

end — S150

FIGURE 12

Europäisches
Patentamt

European
Patent Office

Office européen
des brevets

## EUROPEAN SEARCH REPORT

Application Number

EP 17 30 5880

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SAMUELSSON J ET AL: "Conversion and Coding Practices for HDR/WCG Y"2CbCr 4:2:0 Video with PQ Transfer Characteristics (Draft 4)", 26. JCT-VC MEETING; 12-1-2017 - 20-1-2017; GENEVA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-Z1017, 11 February 2017 (2017-02-11), XP030118169, * page 20, paragraph 8 - page 22, last line * * page 1, line 1 - page 1, last line * ----- | 1-12 | INV. H04N19/126 H04N19/186 H04N19/157 |
| X | WO 2017/093188 A1 (TELEFONAKTIEBOLAGET LM ERICSSON [SE]) 8 June 2017 (2017-06-08) * page 8, line 25 - page 9, line 12 * * page 10, line 3 - page 10, line 16 * ----- | 1-12 | |
| A | WO 2008/026896 A1 (SAMSUNG ELECTRONICS CO LTD [KR]) 6 March 2008 (2008-03-06) * paragraph [0036] * * paragraph [0043] * * paragraph [0053] * ----- | 1-12 | TECHNICAL FIELDS SEARCHED (IPC)  H04N |
| A | Anonymous: "Report ITU-R BT.2390-0 High dynamic range television for production and international programme exchange BT Series Broadcasting service (television)", , 1 January 2016 (2016-01-01), XP055383019, Retrieved from the Internet: URL:https://www.itu.int/dms_pub/itu-r/opb/rep/R-REP-BT.2390-2016-PDF-E.pdf [retrieved on 2017-06-20] * the whole document * ----- | 1-12 | |

The present search report has been drawn up for all claims

| Place of search | Date of completion of the search | Examiner |
|---|---|---|
| Munich | 19 January 2018 | Schoeyer, Marnix |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                ...............................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 30 5880

This annex lists the patent family members relating to the patent documents cited in the above-mentioned European search report.
The members are as contained in the European Patent Office EDP file on
The European Patent Office is in no way liable for these particulars which are merely given for the purpose of information.

19-01-2018

| Patent document cited in search report | Publication date | Patent family member(s) | Publication date |
|---|---|---|---|
| WO 2017093188 A1 | 08-06-2017 | NONE | |
| WO 2008026896 A1 | 06-03-2008 | EP 2057847 A1 | 13-05-2009 |
| | | US 2008056352 A1 | 06-03-2008 |
| | | WO 2008026896 A1 | 06-03-2008 |

EPO FORM P0459

For more details about this annex : see Official Journal of the European Patent Office, No. 12/82

**REFERENCES CITED IN THE DESCRIPTION**

**Non-patent literature cited in the description**

- Conversion and Coding Practices for HDR/WCG Y'CbCr 4:2:0 Video with PQ Transfer Characteristics. *Technical Report ISO/IEC 23008-14,* 2017